# FASCICULE DE BREVET EUROPEEN

(11) **EP 0 613 802 B1**
(45) Date de publication et mention de la délivrance du brevet: **14.01.1998**
(21) Numéro de dépôt: 94400283.1
(22) Date de dépôt: 09.02.1994
(51) Int. Cl.: B60N 2/02

(54) **Distributeur modulaire pour fluide liquide et son application notamment au règlage de sièges pour véhicules**
Modularer Flüssigkeitsverteiler und seine Anwendung insbesondere für eine Autositzverstellung
Modular liquid distributor, used especially for adjusting vehicle seats

(30) Priorité: 23.02.1993 FR 9302068
(43) Date de publication de la demande: 07.09.1994
(73) Titulaire: ECIA - EQUIPEMENTS ET COMPOSANTS POUR L'INDUSTRIE AUTOMOBILE, F-25400 Audincourt (FR)
(72) Inventeur: Escaravage, Gérard, F-25700 Valentigney (FR)
(74) Mandataire: Polus, Camille

(56) Documents cités:
- EP-A- 0 211 497
- DE-A- 2 118 710
- DE-C- 3 933 561
- FR-A- 2 556 294
- GB-A- 2 004 577
- GB-A- 2 146 743
- US-A- 3 879 007

## Description

La présente invention concerne un distributeur pour fluide liquide et, plus particulièrement, un distributeur à guillotine modulaire à au moins une voie et au moins à simple effet et aussi, notamment, son application au réglage à actionneur fluidique de la position d'un siège d'automobile terrestre.

Dans de nombreux secteurs industriels, on fait appel à des actionneurs animés par un fluide liquide, hydraulique ou autre, mis sous pression à l'aide d'une motopompe par exemple pour mouvoir des appareils ou organes qui décrivent des translations et/ou des rotations.

Une telle situation se rencontre par exemple dans l'industrie automobile à bord des véhicules automobiles terrestres. On a déjà proposé de faire le réglage de la position d'un siège, que ce soit la situation longitudinale de l'assise ou l'inclinaison du dossier, à l'aide d'au moins un vérin hydraulique actionné à partir d'une centrale hydraulique unique. Dans ce cas, il faut d'abord mettre en action une électropompe et ensuite agir sur des électrovannes pour faire fonctionner des vérins particuliers dans un sens ou dans l'autre. Le choix d'une centrale hydraulique et de vérins au lieu de divers moteurs électriques, est dû notamment au fait que l'on peut se servir d'une puissance de l'ordre de 100 W seulement au lieu de 300 W, et avec un rendement qui atteint au moins 50% environ. Des solutions de ce type sont par exemple exposées dans les documents FR-A-2 556 294 et US-A-3 879 007.

Pour assurer le réglage de la position d'un tel siège à l'aide d'une centrale hydraulique, il est nécessaire de disposer d'un distributeur à au moins une voie et au moins à simple effet, pour mettre en oeuvre les actionneurs tels que des vérins à simple ou double effet.

GB-A-2 146 743 décrit un distributeur hydraulique, du type destiné à être raccordé à des conduits amont et aval d'un circuit de fluide sous pression, et du type comprenant un corps comportant au moins un boîtier et un tiroir mobile entre une position de repos et une position active de mise en communication des conduits amont et aval.

Le but de l'invention est de confectionner un distributeur à guillotine modulaire à au moins une voie et au moins à simple effet pour, par exemple, permettre la mise en oeuvre sélective d'au moins un vérin dans au moins un sens.

A cet effet, l'invention a pour objet un distributeur à guillotine modulaire à au moins une voie et au moins à simple effet pour fluide liquide, du type destiné à être raccordé à des conduits amont et aval d'un circuit de fluide liquide, et du type comprenant un corps comportant au moins un groupe fait d'un boîtier et d'un basculeur mobile entre une position de repos et une position active de mise en communication des conduits amont et aval, caractérisé en ce que le boîtier forme une cavité cylindrique intérieure avec une cloison qui est transpercée de deux regards axiaux diamétralement opposés et qui est délimitée par deux côtés opposés dont l'un d'eux est muni de deux cuvettes symétriques en arc de cercle dont la concavité est dirigée vers l'extérieur et qui sont disposées en quadrature relativement aux regards de manière que leurs extrémités soient situées sur un même cercle que ces derniers, et avec une bordure qui présente deux tranches libres opposées munies chacune de créneaux formant des pleins et des creux et qui est transpercée de deux tubulures pratiquement radiales diamétralement opposées qui débouchent chacune dans une de ces deux cuvettes, en ce que le basculeur, formant une galette cylindrique, est logé au moins partiellement dans cette cavité et comporte une paroi qui est transpercée de deux passages axiaux diamétralement opposés et qui est délimitée par deux côtés opposés dont l'un est muni de deux cuvettes symétriques en arc de cercle dont la concavité est dirigée vers l'extérieur et qui sont disposées relativement aux passages de manière que chacune d'elles entoure partiellement l'un de ces passages et de manière que leurs extrémités soient situées sur un même cercle que les passages et avec une commande, et en ce que le distributeur comprend de plus, à chaque extrémité du corps, un flasque formant une cavité intérieure cylindrique avec un fond qui est transpercé d'au moins un orifice axial pour la circulation du fluide et qui est délimité par deux faces opposées et avec une bordure qui présente une tranche libre munie de créneaux formant des pleins et des creux complémentaires de ceux des créneaux de la tranche d'extrémité libre de la bordure du boîtier avec lesquels ils sont destinés à coopérer pour s'enchevêtrer de manière que la cavité d'un flasque et la cavité d'un boîtier délimitent ensemble une enceinte où peut tourner le basculeur, une sollicitation élastique qui maintient normalement le basculeur dans sa position de repos pour laquelle les tubulures d'un boîtier ne sont pas en communication avec les orifices d'un flasque, les orifices, regards et passages étant alignés, et à l'encontre de laquelle il faut agir pour placer le basculeur dans une position active pour laquelle les tubulures d'un boîtier sont en communication avec les orifices d'un flasque, les orifices, cuvettes des boîtier et basculeur et tubulures étant en relation, un agencement d'étanchéité pour assurer l'étanchéité entre flasques, boîtier et basculeur, des moyens de liaison pour retenir regroupés les flasques et le corps, et un dispositif de fixation pour assujettir le distributeur.

D'autres caractéristiques de l'invention ressortiront de la lecture de la description et des revendications qui suivent ainsi que de l'examen du dessin annexé, donné seulement à titre d'exemple, où :
- la Figure 1 est une vue extérieure en élévation d'un mode de réalisation d'un distributeur selon l'invention;
- la Figure 2 est une vue en perspective partielle éclatée du mode de réalisation de la Figure 1;
- la Figure 3 est une vue de la face intérieure ou recto du fond d'un flasque de la Figure 1;
- la Figure 4 est une vue de la face extérieure ou verso du fond d'un flasque de la Figure 1;
- la Figure 5 est une vue du côté verso de la paroi du basculeur de la Figure 1;
- la Figure 6 est une vue du côté recto de la cloison d'un boîtier de la Figure 1;
- la Figure 7 est une vue du basculeur de la Figure 5 logé dans la cavité intérieure cylindrique du boîtier de la Figure 6;
- les Figures 8 et 9 sont des sections locales partielles de détail illustrant la sollicitation élastique respectivement lorsque le basculeur est en position de repos et lorsqu'il est dans une position active;
- la Figure 10 est une coupe partielle locale de détail d'une sécurité;
- la Figure 11 est une vue schématique où les flasques, boîtier et basculeur sont supposés transparents illustrant les positions relatives lorsque le basculeur est en position de repos; les orifices, passages, regards et tubulures étant dessinés à des échelles différentes pour faciliter la représentation;
- la Figure 12 est une vue analogue à celle de la Figure 11 où le basculeur est dans une position active; et
- la Figure 13 est une section locale de détail partielle illustrant l'agencement d'étanchéité.

Les distributeurs à au moins une voie et à au moins simple effet pour fluide liquide, notamment du type de ceux habituellement utilisés par exemple pour faire fonctionner des vérins hydrauliques ou autres, étant bien connus dans la technique, de même que les sièges pour véhicules automobiles terrestres, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un distributeur selon l'invention avant d'en exposer, au besoin la fabrication et le montage et le fonctionnement.

Dans ce qui suit, on supposera que le distributeur selon l'invention est d'un type qui convient à son application au réglage de la position d'un siège de véhicule automobile terrestre animé par un actionneur du type d'un vérin V à double effet.

Comme on le voit, un distributeur modulaire à guillotine selon l'invention comprend un corps 10 constitué d'au moins un groupe fait d'un boîtier 11 et d'un basculeur 12, un flasque 20 à chaque extrémité du corps 10, une sollicitation élastique 30, un agencement d'étanchéité 40, des moyens de liaison 50, un dispositif de fixation 60 et, de préférence, une sécurité 70.

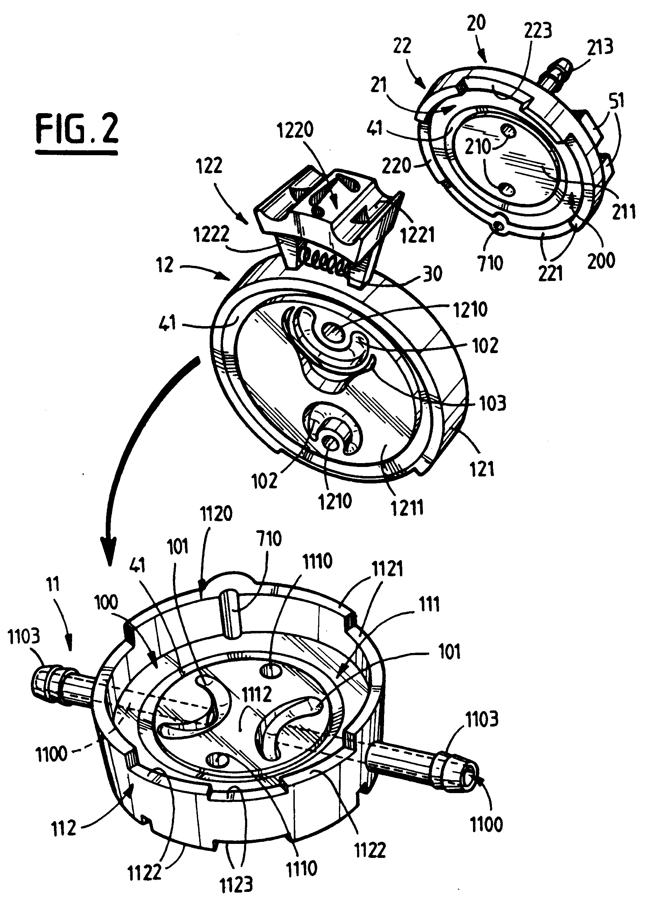

Comme on le voit, un boîtier 11 comprend, essentiellement, une cloison 111 et une bordure 112. Le boîtier 11 délimite une cavité 100 cylindrique intérieure. La cloison 111 est transpercée de deux regards 1110 axiaux, de préférence diamétralement opposés, et est délimitée par deux côtés opposés 1111 et 1112. Comme on le verra par la suite, le côté 1111, ou recto sur la Figure 2, est muni s'il y a lieu de l'agencement d'étanchéité 40. L'autre côté 1112, ou verso, est muni de deux cuvettes 101 de préférence symétriques et en arc de cercle dont la concavité est dirigée vers l'extérieur. Pour les raisons qui apparaîtront par la suite, les cuvettes 101 sont disposées en quadrature relativement aux regards 1110 de manière que les extrémités ou cornes des cuvettes soient situées sur un même cercle que les regards. Ceci est clairement illustré notamment sur la Figure 2 du dessin. Comme on le comprendra par la suite, ces regards et cuvettes sont tels que l'un sert à l'arrivée (A) et l'autre au retour (R) du fluide. La bordure 112 présente deux tranches 1120 libres, opposées, qui sont munies chacune de créneaux 1121 formant des pleins et des creux à la manière de merlons et d'embrasures, respectivement. Pour les raisons que l'on comprendra par la suite, les tranches libres sont aussi munies, chacune, d'un décrochement 1122 de préférence double et d'une encoche 1123 sur lesquels on reviendra. Comme on le voit, la bordure 1120 est aussi transpercée de deux tubulures 1100 de préférence pratiquement radiales et diamétralement opposées qui débouchent chacune dans une des cuvettes 101. Ces tubulures sont aussi munies, à l'extérieur, de raccords 1103 équipés d'embouts en "hérisson" par exemple de tout type approprié pour les raisons que l'on comprendra par la suite. L'une de ces tubulures est destinée à l'arrivée (A) et l'autre au retour (R) du fluide comme on le comprendra par la suite, après raccordement au vérin V. Ceci apparaît clairement sur les Figures 2, 11 et 12 notamment.

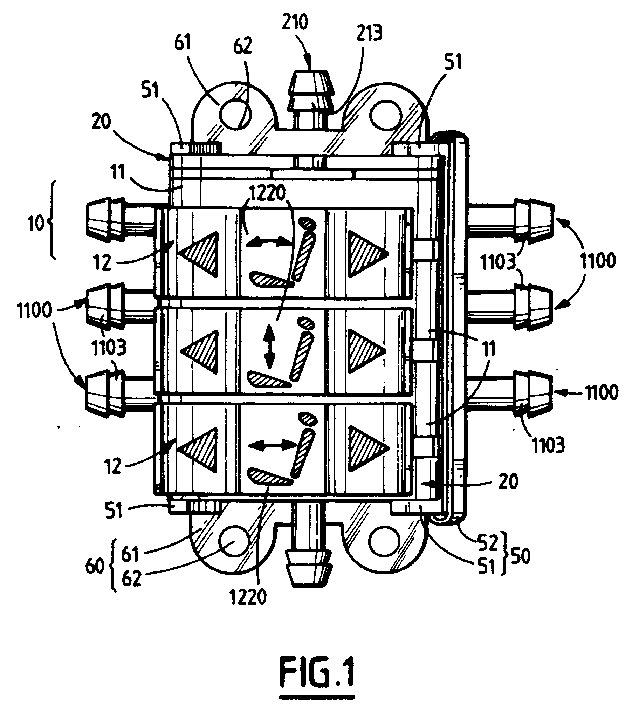

Le basculeur 12 qui est mobile entre une position de repos et au moins une position active, comprend une paroi 121 et une commande 122. Le basculeur 12 en forme de galette cylindrique a sa paroi 121 qui est transpercée de deux passages 1210 de préférence axiaux diamétralement opposés, et est délimité par deux côtés. Un côté 1211 ou recto, qui est par exemple équipé d'un agencement d'étanchéité 40, et qui est muni de deux cuvettes 102 de préférence symétriques en arc de cercle dont la concavité est dirigée vers l'extérieur et qui sont disposées relativement aux passages 1210 de manière que chacune d'elles entoure partiellement l'un de ces passages et de manière que les extrémités ou cornes soient disposées sur un même cercle que les passages. S'il y a lieu, ce côté est aussi muni d'une décharge 103 sur laquelle on reviendra par la suite. Ces passages et cuvettes sont tels que les uns sont destinés à l'arrivée (A) et les autres au retour (R) du fluide. L'autre côté 1212 ou verso, est équipé s'il y a lieu d'un agencement d'étanchéité 40. La commande 122, de préférence radiale apparente comprend une manette 1220 qui est équipée d'une tête 1221 de manoeuvre et d'un pied 1222 de jonction qui relie la tête à la paroi. De préférence, la tête de manoeuvre est superficiellement striée ou autrement configurée de manière à en faciliter la manipulation par exemple à l'aide d'un doigt, comme on le comprendra par la suite. Comme cela est aussi illustré en particulier sur la Figure 1, de préférence la tête de manoeuvre est munie de figurines signalétiques ou autres, indicatrices de l'opération de réglage et du sens de ce dernier. Comme on le voit notamment sur la Figure 1, le mode de réalisation illustré du distributeur selon l'invention permet de régler, dans les deux sens opposés, la position longitudinale et verticale de l'assise d'un siège et l'inclinaison de son dossier. Pour les raisons qui apparaîtront par la suite, le pied de jonction 1222 est aussi transpercé d'une ouverture 1223. Le pied de jonction 1222 est destiné à se déplacer dans un couloir de circulation qui est délimité par deux décrochements 1122 en vis-à-vis.

Le flasque 20 comprend un fond 21 et une bordure 22. Le flasque 20 délimite une cavité 200 cylindrique intérieure. Le fond 21 est transpercé d'au moins un orifice 210 par exemple axial et de préférence deux pour la circulation du fluide, l'un servant à l'admission (A) et l'autre au refoulement (R) de ce dernier. Ce fond est délimité par deux faces 211 et 212 opposées. La face 211 intérieure ou recto est par exemple destinée à être équipée d'un agencement d'étanchéité 40 et la face 212 extérieure ou verso est munie de raccords 213, associés chacun à un orifice 210, qui se présentent à la manière d'embouts avec des "hérissons" ou similaires de tout type approprié. La bordure 22 présente une tranche libre 220 munie de créneaux 221 formant des pleins et des creux, tels des merlons et des embrasures. Les créneaux 221 sont complémentaires des créneaux 1121 de la tranche libre 1120 de la bordure 112 du boîtier 11, avec lesquels ils sont destinés à coopérer pour s'enchevêtrer, comme on le comprendra par la suite. Le flasque 20 définit la cavité 200 intérieure cylindrique qui avec la cavité 100 du boîtier 11 délimitent, ensemble, une enceinte où est logé et où peut tourner le basculeur 12.

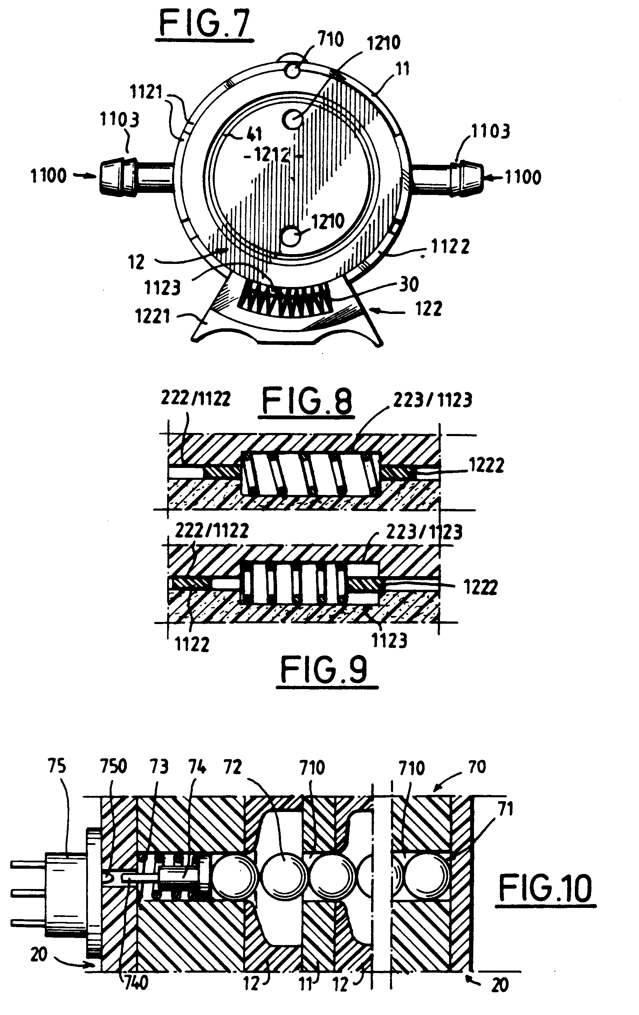

La sollicitation élastique 30 est par exemple faite d'un ressort à boudin avec des spires enroulées selon une hélice cylindrique. Le ressort à boudin est placé dans l'ouverture 1223 du pied de jonction de la manette de la commande du basculeur et est engagé dans les encoches 223 de la bordure du flasque 20 et dans les encoches 1123 de la bordure du boîtier 11. Ceci est clairement illustré notamment sur les Figures 8 et 9. Cette sollicitation élastique maintient normalement le basculeur 12 dans sa position de repos et il faut agir à l'encontre de celle-ci pour placer le basculeur dans l'une ou l'autre de ses deux positions actives qui sont séparées par la position de repos, comme on le comprendra par la suite.

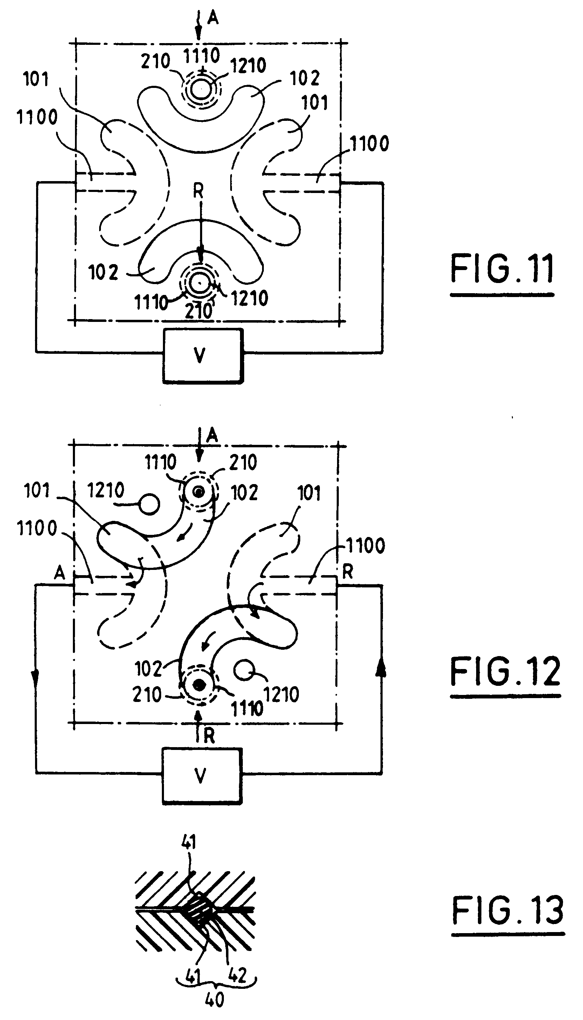

L'agencement d'étanchéité 40 comprend au moins une rainure 41 ou gorge, par exemple à profil triangulaire en section droite, ménagée dans l'une au moins des faces 211 intérieures ou recto du fond d'un flasque et/ou dans l'un au moins des côtés opposés 1111 et 1112 de la cloison du boîtier et 1211 et 1212 de la paroi du basculeur. Un joint 42, par exemple torique approprié, est logé dans la rainure 41. Ceci est classique et est clairement illustré sur les figures du dessin, notamment les Figures 2 et 13.

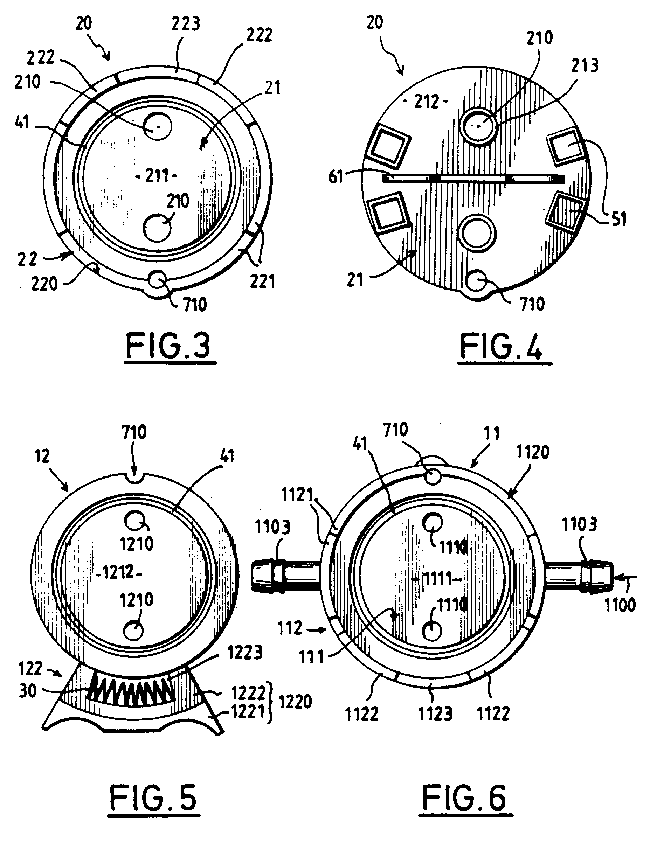

Les moyens de liaison 50 tiennent regroupés les flasques 20 et le corps 10 en une entité étanche dans laquelle un basculeur 12 peut se déplacer. Ces moyens de liaison 50 comprennent, par exemple, au moins un bossage 51 à dépression sur la face extérieure 212 du fond 21 de chaque flasque 20, et un étrier 52 en forme de pince dont les branches approximativement parallèles sont en prise avec deux bossages à dépression opposés. Ceci est clairement illustré notamment sur les Figures 1 et 4 du dessin. Il est clair qu'au lieu d'utiliser un type de moyens de liaison à agrafage élastique, on peut utiliser des tirants ou similaires, voire des techniques de vissage, rivetage, collage ou de soudage appropriées.

Le dispositif de fixation 60 permet d'assujettir le distributeur selon l'invention à un support destiné à le recevoir en vue de son utilisation par exemple à bord d'un véhicule. Ce dispositif de fixation comprend par exemple au moins une patte 61 ou similaire sur la face extérieure 212 du fond 21 d'au moins un flasque 20, et au moins un trou 62 ou similaire ménagé dans cette patte pour y placer un rivet, une vis ou similaire par exemple.

Pour le cas où le mode de réalisation d'un distributeur selon l'invention comprend deux basculeurs ou plus, il est muni de préférence d'une sécurité 70 qui interdit la manoeuvre simultanée de plus de un basculeur à la fois. Cette sécurité qui est par exemple du type décrit dans le document FR 92- 11 277 auquel on se reportera utilement pour plus de détails, comprend, essentiellement, un chenal 71 constitué de tronçons 710 qui sont ménagés dans les cloisons 111 et parois 121 et sont alignés, et dans lequel sont logées des billes 72, un ressort 73, une butée mobile 74 dont la queue 740 agit sur un organe de commande 750 d'un capteur 75. Ceci est illustré en détail sur la Figure 10. Le capteur 75 qui est actionné quel que soit celui des basculeurs 12 qui est manoeuvré et quel que soit le sens, permet de faire fonctionner la motopompe d'une centrale hydraulique qui met le circuit de fluide liquide en pression pour animer les actionneurs tels des vérins V à double effet.

Les divers constituants d'un distributeur selon l'invention sont, par exemple, faits en matériaux synthétiques mis en forme par exemple par moulage.

Tous les constituants sont réunis, montés et assemblés comme cela ressort clairement de l'examen du dessin.

Dans ce qui suit, un distributeur selon l'invention est décrit dans son application particulière au réglage d'un siège de véhicule automobile terrestre.

Les détails des branchements électriques et hydrauliques ne sont pas tous illustrés. C'est par exemple le cas de la motopompe dont le circuit hydraulique est relié aux orifices 210 d'admission (A) et de refoulement (R) des flasques 20 et dont le circuit électrique, branché sur une source d'énergie convenable, est relié au capteur 75.

On se reportera maintenant plus spécialement aux Figures 8 et 9, d'une part, et 11 et 12, d'autre part.

En position initiale ou de repos, le distributeur selon l'invention occupe la configuration où il est illustré sur les Figures 8 et 11. On voit alors que le dispositif de sollicitation élastique est tel que le ressort occupe la totalité du logement délimité par deux encoches en vis-à-vis (Figure 8). Dans cette situation, les orifices 210 du fond d'un flasque, les regards 1110 du boîtier et les passages 1210 du basculeur sont tous alignés les uns avec les autres. On voit que les cuvettes 101 du boîtier et 102 du basculeur ne sont pas en communication et il en donc de même des tubulures 1100 avec les orifices 210 du flasque qui se trouvent ainsi isolés les uns des autres. D'autre part, le moteur de mise sous pression n'est pas alimenté. Cette situation est celle qui est illustrée sur la Figure 11.

Si maintenant on agit sur un basculeur 12, dans un sens ou dans l'autre, pour le déplacer à l'encontre de la sollicitation élastique, on comprime le ressort comme illustré sur la Figure 9. Le basculeur occupe alors la position illustrée schématiquement sur la Figure 12 pour laquelle le capteur 75 est activé et la motopompe alimentée. Une cuvette 102 du basculeur occupe une position telle que ses extrémités ou cornes sont en liaison maintenant, d'une part, avec un orifice 210 via un regard 1110 et, d'autre part, avec une cuvette 101 du boîtier dans laquelle débouche une tubulure 1100, tubulure qui est elle-même raccordée à l'actionneur V comme illustré sur les Figures 12 et 13. On voit donc que le fluide reçu par l'admission (A) parcourt les arrivées (A) et revient par les retours (R) pour regagner le refoulement (R) en opérant sur l'actionneur. Le sens de circulation est illustré par des flèches ainsi que par leur pointe et empennage.

Lorsqu'on relâche la commande du basculeur, celui-ci revient spontanément à sa position de repos sous l'action de la sollicitation élastique. Le capteur est neutralisé et la motopompe n'est plus en fonctionnement.

On voit que le distributeur modulaire selon l'invention permet de distribuer un fluide sous pression à différents actionneurs, de sélectionner l'actionneur alimenté dans le sens choisi, et aussi de condamner toutes possibilités d'alimenter simultanément plusieurs actionneurs tout en déclenchant automatiquement à chaque fois le fonctionnement d'une motopompe assurant l'alimentation en fluide sous pression.

Dans le mode de réalisation illustré, le distributeur modulaire permet de faire fonctionner trois actionneurs, mais il est clair que le nombre d'actionneurs n'est pas limité à cette valeur du fait de la configuration modulaire à simple empilement.

La décharge 103 permet d'assurer l'équilibre des chambres de l'actionneur dans le cas où celui-ci est du type vérin à double effet.

Il est clair que chaque face extérieure 212 du fond 21 d'un flasque 20 peut être munie d'un ou deux raccords 213, chacun associé à un orifice 210, correspondant, respectivement pour l'admission et le refoulement. Le choix du nombre et de l'implantation sont faits selon que l'admission et le refoulement ont lieu sur un même flasque ou sur deux flasques opposés. Les raccords inutilisés, que ce soit ceux des flasques ou des tubulures sont alors obturés ou fermés par des bouchons appropriés.

Un distributeur selon l'invention trouve une application notamment pour le réglage de la position des sièges de véhicules automobiles terrestres. Pour une telle application, la solution selon l'invention permet de diminuer la consommation d'énergie électrique, de réduire l'usure mécanique, d'utiliser et maintenir une pression de valeur relativement limitée d'où une réduction notable des risques de fuite. Une telle solution fonctionne pratiquement sans bruit.

Ce qui précède met bien en lumière les particularités distinctives de l'invention et permet de saisir l'intérêt qu'elle offre et les avantages qu'elle procure.

## Revendications

1. Distributeur à guillotine modulaire à au moins une voie et au moins à simple effet pour fluide liquide, du type destiné à être raccordé à des conduits amont et aval d'un circuit de fluide liquide, et du type comprenant un corps (10) comportant au moins un groupe fait d'un boîtier (11) et d'un basculeur (12) mobile entre une position de repos et une position active de mise en communication des conduits amont et aval, caractérisé
en ce que le boîtier (11) forme une cavité (100) cylindrique intérieure avec une cloison (111) qui est transpercée de deux regards (1110) axiaux diamétralement opposés et qui est délimitée par deux côtés (1111, 1112) opposés dont l'un (1112) d'eux est muni de deux cuvettes (101) symétriques en arc de cercle dont la concavité est dirigée vers l'extérieur et qui sont disposées en quadrature relativement aux regards (1110) de manière que leurs extrémités soient situées sur un même cercle que ces derniers (1110), et avec une bordure (112) qui présente deux tranches (1120) libres opposées munies chacune de créneaux (1121) formant des pleins et des creux et qui est transpercée de deux tubulures (1100) pratiquement radiales diamétralement opposées qui débouchent chacune dans une de ces deux cuvettes (101),
en ce que le basculeur (12), formant une galette cylindrique, est logé au moins partiellement dans cette cavité (100) et comporte une paroi (121) qui est transpercée de deux passages (1210) axiaux diamétralement opposés et qui est délimitée par deux côtés (1211, 1212) opposés dont l'un (1211) est muni de deux cuvettes (102) symétriques en arc de cercle dont la concavité est dirigée vers l'extérieur et qui sont disposées relativement aux passages (1210) de manière que chacune d'elles entoure partiellement l'un de ces passages (1210) et de manière que leurs extrémités soient situées sur un même cercle que les passages (1210) et avec une commande (122),
et en ce que le distributeur comprend de plus,
à chaque extrémité du corps (10), un flasque (20) formant une cavité (200) intérieure cylindrique avec un fond (21) qui est transpercé d'au moins un orifice (210) axial pour la circulation du fluide et qui est délimité par deux faces (211, 212) opposées et avec une bordure (22) qui présente une tranche (220) libre munie de créneaux (221) formant des pleins et des creux complémentaires de ceux des créneaux (1121) de la tranche d'extrémité libre (1120) de la bordure (112) du boitier (11) avec lesquels ils sont destinés à coopérer pour s'enchevêtrer de manière que la cavité (200) d'un flasque (20) et la cavité (100) d'un boîtier (11) délimitent ensemble une enceinte où peut tourner le basculeur (12),
une sollicitation élastique (30) qui maintient normalement le basculeur (12) dans sa position de repos pour laquelle les tubulures (1100) d'un boîtier (11) ne sont pas en communication avec les orifices (210) d'un flasque (20), les orifices (210), regards (1110) et passages (1210) étant alignés, et à l'encontre de laquelle il faut agir pour placer le basculeur (12) dans une position active pour laquelle les tubulures (1100) d'un boîtier (11) sont en communication avec les orifices (210) d'un flasque (20), les orifices (210), cuvettes (101, 102) des boîtier (11) et basculeur (12) et tubulures (1100) étant en relation,
un agencement (40) d'étanchéité pour assurer l'étanchéité entre flasques (20), boîtier (11) et basculeur (12),
des moyens de liaison (50) pour retenir regroupés les flasques (20) et le corps (10), et
un dispositif de fixation (60) pour assujettir le distributeur.

2. Distributeur à guillotine selon la revendication 1, caractérisé en ce que le basculeur (12) comprend une commande (122) radiale apparente et en ce que la sollicitation élastique (30) comprend un ressort interposé entre commande (122) et boîtier (11).

3. Distributeur à guillotine selon la revendication 2, caractérisé en ce que la commande (122) comprend une manette (1220) avec une tête (1221) de manoeuvre, et un pied (1222) de jonction qui relie la tête (1221) à la paroi (121) et qui est transpercé d'une ouverture (1223) où est encastré le ressort, et en ce que deux tranches libres (1120, 220) de bordures (112, 22) en vis-à-vis sont munies, chacune, d'un décrochement (1122, 222) pour délimiter un couloir où peut se déplacer le pied de jonction (1222) et d'une encoche (1123, 223) pour délimiter un logement où est encastré le ressort (31).

4. Distributeur à guillotine selon l'une quelconque des revendications 1 à 3, caractérisé en ce que l'agencement d'étanchéité (40) comprend une rainure (41) sur l'un au moins des côtés opposés (1211, 1212) de la paroi (121) du basculeur (12), des côtés opposés (1111, 1112) de la cloison (111) du boîtier (11) et de la face intérieure (211) du fond (21) du flasque (20) qui sont en vis-à-vis, et un joint (42) engagé dans la rainure (41).

5. Distributeur à guillotine selon l'une quelconque des revendications 1 à 4, caractérisé en ce que les moyens de liaison (50) comprennent au moins un bossage à dépression (51) sur la face extérieure (212) du fond (21) de chaque flasque (20) et un étrier-pince (52) en prise avec deux bossages à dépression (51) opposés.

6. Distributeur à guillotine selon l'une quelconque des revendications 1 à 5, caractérisé en ce que le dispositif de fixation (60) comprend au moins une patte (61) sur la face extérieure (212) du fond (21) d'au moins un flasque (20) et au moins un trou (62) dans cette patte (61).

7. Distributeur à guillotine selon l'une quelconque des revendications 1 à 6, caractérisé en ce que le basculeur (12) mobile a deux positions actives séparées par la position de repos.

8. Distributeur à guillotine selon l'une quelconque des revendications 1 à 7, caractérisé en ce que l'une au moins des cuvettes (102) du basculeur (12) est bordée par une décharge (103).

9. Distributeur à guillotine selon l'une quelconque des revendications 1 à 8, caractérisé en ce que chaque flasque (20) est muni de deux orifices axiaux (210).

10. Distributeur à guillotine selon l'une quelconque des revendications 1 à 9, caractérisé en ce qu'il comprend au moins deux groupes boîtier-basculeur (11, 12) et une sécurité (70) interdisant la manoeuvre simultanée de plus de un basculeur (12) à la fois.

11. Distributeur à guillotine selon l'une quelconque des revendications 1 à 10, caractérisé en ce que les tubulures (1100) et orifices (210) sont munis de raccords (1103,; 213) respectivement.

12. Application d'un distributeur selon l'une quelconque des revendications 1 à 11 notamment au réglage à actionneur fluidique de la position d'un siège automobile terrestre.

## Claims

1. A modular distributor with a drop down shutter, with at least one channel and at least one single action for a liquid fluid, of the type intended to be connected to conduits upstream and downstream from a liquid fluid circuit, and of the type comprising a body (10) having at least one unit formed by a casing (11) and a rocker (12) movable between a rest position and an active position for causing the upstream and downstream conduits to communicate, characterized
in that the casing (11) forms an internal cylindrical cavity (100) with a partition (111) which is pierced through by two diametrically opposed axial holes (1110) and which is delimited by two opposed sides (1111, 1112), whereof one (1112) is provided with two symmetrical circular arcuate channels (101) whose concavity is directed towards the outside and which are disposed in quadrature relative to the holes (1110), so that their ends are situated on the same circle as the latter (1110), and with an edge (112) which has two opposed free portions (1120), each provided with crenellations (1121) forming solid tops and hollows and which is pierced through by two practically radial diametrically opposed tubes (1100) which each open out in one of these two channels (101),
in that the rocker (12) forming a cylindrical block is accommodated at least partly in this cavity (100) and has a wall (121) which is pierced through by two diametrically opposed axial passages (1210) and which is delimited by two opposed sides (1211, 1212), whereof one (1211) is provided with two symmetrical circular arcuate channels (102) whose concavity is directed towards the outside, and which are disposed relative to the passages (1210) so that each one of them partly surrounds one of these passages (1210) and so that their ends are situated on the same circle as the passages (1210), and with a control (122),
and in that the distributor comprises, moreover,
at each end of the body (10), an end plate (20) forming a cylindrical internal cavity (200) with a bottom (21) which is pierced through by at least one axial opening (210) for the circulation of the fluid and which is delimited by two opposed sides (211, 212) and with an edge (22) which has a free portion (220) provided with crenellations (221) forming solid tops and hollows complementary to those of the crenellations (1121) of the free end portions (1120) of the edge (112) of the casing (11) wherewith they are intended to cooperate for engaging in one another, so that the cavity (200) of one end plate (20) and the cavity (100) of a casing (11) together delimit an enclosure wherein the rocker (12) can rotate,
a resilient pulling means (30) which normally keeps the rocker (12) in its rest position wherein the tubes (1100) of a casing (11) do not communicate with the openings (210) of an end plate (20), the openings (210), holes (1110) and passages (1210) being aligned, and against which it is necessary to act to place the rocker (12) into an active position wherein the tubes (1100) of a casing (11) communicate with the openings (210) of an end plate (20), the openings (210), the channels (101, 102) of the casing (11) and of the rocker (12), and the tubes (1100) being connected,
a sealing arrangement (40) to ensure the seal between the end plates (20), the casing (11) and the rocker (12),
connecting means (50) for keeping the end plates (20) and the body (10) joined, and a fixing device (60) for securing the distributor.

2. A distributor with a drop down shutter according to claim 1, characterized in that the rocker (12) has a visible radial control (122) and in that the resilient pulling means (30) comprises a spring interposed between the control (122) and the casing (11).

3. A distributor with a drop down shutter according to claim 2, characterized in that the control (122) has an operating handle (1220) with a manipulating head (1221) and a connecting foot (12, 22) which connects the head (1221) to the wall (121) and which is pierced through by an opening (1223) wherein the spring is fitted, and in that two opposed free portions (1120, 220) of the edges (112, 22) are each provided with a setback (1122, 22), so as to delimit a channel wherein the connecting foot (1222) can be displaced, and a slot (1123, 223) to delimit a recess wherein the spring (30) is fitted.

4. A distributor with a drop down shutter according to any one of claims 1 to 3, characterized in that the sealing arrangement (40) comprises a groove (41) on at least one of the opposed sides (1211, 1212) of the wall (121) of the rocker (12), on opposite sides (1111, 1112) of the partition (111) of the casing (11) and the internal side (211) of the bottom (21) of the end plate (20) which are opposite one another, and a gasket (42) engaged in the groove (41).

5. A distributor with a drop down shutter according to any one of claims 1 to 4, characterized in that the connecting means (50) comprise at least one boss (51) with a recess on the outer side (212) of the bottom (21) of each end plate (20), and a stirrup clamp (52) engaging with two opposed bosses (51) with recesses.

6. A distributor with a drop down shutter according to any one of claims 1 to 5, characterized in that the fixing device (60) comprises at least one tab (61) on the outer side (212) of the bottom (21) of at least one end plate (20) and at least one hole (62) in this tab (61).

7. A distributor with a drop down shutter according to any one of claims 1 to 6, characterized in that the movable rocker (12) has two active positions separated by the rest position.

8. A distributor with a drop down shutter according to any one of claims 1 to 7, characterized in that at least one of the channels (102) of the rocker (12) is surrounded by an outlet (103).

9. A distributor with a drop down shutter according to any one of claims 1 to 8, characterized in that each end plate (20) is provided with two axial openings (210).

10. A distributor with a drop down shutter according to any one of claims 1 to 9, characterized in that it comprises at least two casing-rocker units (11, 12) and a safety device (70) prohibiting the simultaneous manipulation of more than one rocker (12) at one time.

11. A distributor with a drop down shutter according to any one of claims 1 to 10, characterized in that the tubes (1100) and openings (210) are respectively provided with connecting means (1103; 213).

12. Application of a distributor according to any one of claims 1 to 11, in particular to the adjustment with a fluid actuator of the position of a seat of an on-land motor vehicle.

## Patentansprüche

1. Mindestens einfach wirkender modularer Abscherverteiler mit mindestens einem Weg für ein flüssiges Fluid, der zum Anschluß an die Eingangsleitung und die Ausgangsleitung eines Flüssigkeitskreises bestimmt ist und einen Körper (10) aufweist, der mindestens eine Gruppe besitzt, die aus einem Gehäuse (11) und einem Schwenkelement (12) besteht, das zwischen einer Ruhestellung und einer aktiven Stellung beweglich ist, in der die Eingangsleitung und die Ausgangsleitung miteinander verbunden sind, **dadurch gekennzeichnet**, daß das Gehäuse (11) einen inneren zylindrischen Hohlraum (100) bildet und eine Querwand (111) aufweist, die von zwei axialen, diametral einander entgegengesetzten Löchern (1110) durchsetzt ist und von zwei entgegengesetzten Seiten (1111, 1112) abgegrenzt ist, von denen eine (1112) mit zwei zueinander symmetrischen, kreisbogenförmigen Mulden (101) versehen ist, deren Konkavität nach außen gerichtet ist und die bezüglich der Löcher (1110) um 90° versetzt so angeordnet sind, daß ihre Enden auf demselben Kreis wie diese (1110) liegen, sowie eine Einfassung (112), die zwei einander entgegengesetzte freie Kanten (1120) aufweist, die jeweils mit Stufen (1121) versehen sind, die volle und ausgesparte Teile bilden, und die von zwei praktisch radialen und einander diametral entgegengesetzten Rohrleitungen (1100) durchsetzt ist, die jeweils in eine der Mulden (101) münden, daß das eine zylindrische Scheibe bildende Schwenkelement (12) mindestens teilweise in den Hohlraum (100) eingesetzt ist und eine Wand (121) besitzt, die von zwei axialen, einander diametral entgegengesetzten Durchgängen (1210) durchsetzt ist und durch zwei entgegengesetzte Seiten (1211, 1212) abgegrenzt ist, von denen die eine (1211) mit zwei zueinander symmetrischen kreisbogenförmigen Mulden (102) versehen ist, deren Konkavität nach außen gerichtet ist und die bezüglich der Durchgänge (1210) so angeordnet sind, daß jede von ihnen einen dieser Durchgänge (1210) teilweise umgibt und daß ihre Enden auf demselben Kreis wie die Durchgänge (1210) liegen, sowie ein Betätigungselement (122), und daß jeder Verteiler außerdem folgende Einrichtungen aufweist: an jedem Ende des Körpers (10) eine einen inneren zylindrischen Hohlraum (200) bildende Wange (20) mit einem Boden (21), der von mindestens einer axialen Öffnung (210) für den Umlauf des Fluids durchsetzt ist und von zwei entgegengesetzten Seiten (211, 212) abgegrenzt ist, und mit einer Einfassung (22), die eine freie Kante (220) aufweist, die mit Stufen (221) versehen ist, die volle und ausgesparte Teile bilden, die die der Stufen (1121) der freien Stirnkante (1120) der Einfassung (112) des Gehäuses (11) ergänzen, mit denen sie durch Ineinandergreifen so zusammenwirken sollen, daß der Hohlraum (200) einer Wange (20) und der Hohlraum (100) eines Gehäuses (11) zusammen eine Kammer bilden, in der sich das Schwenkelement (12) drehen kann, eine Federbelastung (30), die das Schwenkelement (12) normalerweise in seiner Ruhestellung hält, in der die Rohrleitungen (1100) eines Gehäuses (11) nicht mit den Öffnungen (210) einer Wange (20) verbunden sind, wobei die Öffnungen (210), die Löcher (1110) und die Durchgänge (1210) in Flucht sind, und entgegen welcher einzuwirken ist, um das Schwenkelement (12) in eine aktive Stellung zu bringen, in der die Rohrleitungen (1100) eines Gehäuses (11) mit den Öffnungen (210) einer Wange (20) verbunden sind, wobei die Öffnungen (210), die Mulden (101, 102) des Gehäuses (11) und des Schwenkelements (12) und die Rohrleitungen (1100) miteinander in Verbindung stehen, eine Dichtungsanordnung (40) zur Abdichtung zwischen Wangen (20), Gehäuse (11) und Schwenkelement (12), Verbindungseinrichtungen (50) zum Zusammenhalten der Wangen (20) und des Körpers (10) und eine Befestigungsvorrichtung zur Anbringung des Verteilers.

2. Abscherverteiler nach Anspruch 1, dadurch gekennzeichnet, daß das Schwenkelement (12) ein sichtbares radiales Betätigungselement (122) aufweist und daß die Federbeaufschlagung (30) aus einer zwischen das Betätigungselement (122) und das Gehäuse (11) eingesetzten Feder besteht.

3. Abscherverteiler nach Anspruch 2, dadurch gekennzeichnet, daß das Betätigungselement (122) einen Handgriff (1220) mit einem Betätigungskopf (1221) und einem Verbindungsfuß (1222) aufweist, der den Kopf (1221) mit der Wand (121) verbindet und der von einer Öffnung (1223) durchsetzt ist, in die die Feder eingespannt ist, und daß zwei freie Kanten (1120, 220) von einander gegenüberstehenden Einfassungen (112, 22) jeweils mit einem Absatz (1122, 222) versehen sind, um einen Gang abzugrenzen, in dem sich der Verbindungsfuß (1222) bewegen kann, sowie mit einem Einschnitt (1123, 223), um eine Aussparung abzugrenzen, in die die Feder (31) eingespannt ist.

4. Abscherverteiler nach einem der Ansprüche 1 bis 3, dadurch gekennzeichnet, daß die Dichtungsanordnung (40) eine Nut (41) auf mindestens einer der entgegengesetzten Seiten (1211, 1212) der Wand (121) des Schwenkelements (12), der einander entgegengesetzten Seiten (1111, 1112) der Querwand (111) des Gehäuses (11) und der Innenseite (211) des Bodens (21) der Wange (20) aufweist, die einander gegenüberstehen, sowie einen in die Nut (41) eingesetzten Dichtring (42).

5. Abscherverteiler nach einem der Ansprüche 1 bis 4, dadurch gekennzeichnet, daß die Verbindungseinrichtungen (50) mindestens eine Erhebung (51) mit einer Vertiefung auf der Außenseite (212) des Bodens (21) jeder Wange (20) und einen Klammerbügel (52) aufweisen, der mit zwei entgegengesetzten Erhebungen (51) mit Vertiefung in Eingriff ist.

6. Abscherverteiler nach einem der Ansprüche 1 bis 5, dadurch gekennzeichnet, daß die Befestigungsvorrichtung (60) mindestens einen Lappen (61) auf der Außenseite (212) des Bodens (21) mindestens einer Wange (20) und mindestens ein in diesem Lappen (61) vorgesehenes Loch (62) aufweist.

7. Abscherverteiler nach einem der Ansprüche 1 bis 6, dadurch gekennzeichnet, daß das bewegliche Schwenkelement (12) zwei aktive Stellungen hat, die durch die Ruhestellung voneinander getrennt sind.

8. Abscherverteiler nach einem der Ansprüche 1 bis 7, dadurch gekennzeichnet, daß mindestens eine der Mulden (102) des Schwenkelements (12) von einem Austritt (103) gesäumt ist.

9. Abscherverteiler nach einem der Ansprüche 1 bis 8, dadurch gekennzeichnet, daß jede Wange (20) mit zwei axialen Öffnungen (210) versehen ist.

10. Abscherverteiler nach einem der Ansprüche 1 bis 9, dadurch gekennzeichnet, daß er mindestens zwei Gehäuse-Schwenkelement-Gruppen (11, 12) und eine Sicherung (70) aufweist, die die gleichzeitige Betätigung von mehr als einem Schwenkelement (12) gleichzeitig sperrt.

11. Abscherverteiler nach einem der Ansprüche 1 bis 10, dadurch gekennzeichnet, daß die Rohrleitungen (1100) und Öffnungen (210) mit Anschlüssen (1103, 213) versehen sind.

12. Anwendung eines Verteilers nach einem der Ansprüche 1 bis 11 insbesondere auf die Verstellung eines Sitzes eines Bodenkraftfahrzeugs mit Hilfe eines Fluidstellglieds.
